# EUROPÄISCHE PATENTSCHRIFT

(11) **EP 0 741 119 B1**
(45) Veröffentlichungstag und Bekanntmachung des Hinweises auf die Patenterteilung: **16.02.2000**
(21) Anmeldenummer: 96106862.4
(22) Anmeldetag: 01.05.1996
(51) Int. Cl.: C06B 23/00

(54) **Composit-Festtreibstoff und Verfahren zu seiner Herstellung**
Composite propellant and process for the manufacture thereof
Propergol composite et son procédé de fabrication

(30) Priorität: 05.05.1995 DE 19516528
(43) Veröffentlichungstag der Anmeldung: 06.11.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Menke, Klaus, Dr., 76646 Bruchsal (DE); Brehler, Klaus-Peter, Dr., 77815 Bühl (DE); Böhnlein-Mauss, Jutta, Dr., 67346 Speyer (DE)

(56) Entgegenhaltungen:
- US-A- 3 322 804
- US-A- 3 447 981
- US-A- 3 781 179
- US-A- 3 968 126
- US-A- 4 023 994
- CHEMICAL ABSTRACTS, vol. 124, no. 10, 4 March 1996 Columbus, Ohio, US; abstract no. 121356h, J. BOEHNLEIN-MAUSS ET AL.: "New chemically bound ferrocenes for burn rate modification of composite rocket and gas generating propellants." page 254; XP002010770 & INT. ANNU. CONF. ICT 1995, 26TH(PYROTECHNICS), 53/1-53/16,

## Beschreibung

Die Erfindung betrifft Composit-Festtreibstoff, enthaltend ein kristallines anorganisches Oxidationsmittel, einen Binder mit einem flüssigen, mehrfach OH-substituierten Prepolymer, mindestens ein Verknüpfungsreagenz, polymerspezifische Weichmacher, Antioxidantien und Haftvermittler, ein an den Binder angekoppeltes Ferrocenderivat als Abbrandmodifikator und gegebenenfalls einen metallischen Brennstoff und/oder ein energiereiches Nitramin. Die Erfindung betrifft ferner ein Verfahren zur Herstellung eines solchen Festtreibstoffs.

Festtreibstoffe der vorgenannten Art [11] werden vor allem als Raketen- oder als Gasgenerator-Festtreibstoffe eingesetzt. Dabei haben die meist katalytisch wirkenden Abbrandmodifikatoren die Aufgabe, den Abbrand in vorbestimmter Weise zu lenken, insbesondere die Abbrandgeschwindigkeit zu erhöhen und nach Möglichkeit gleichzeitig den Druckexponenten, d.h. die Abhängigkeit der Abbrandgeschwindigkeit vom Druck, zu erniedrigen. Der Abbrandmodifikator muß andererseits so beschaffen sein, daß er weder die Verarbeitkeit (Gießfähigkeit) noch die Zuverlässigkeit, Lebensdauer und Empfindlichkeit oder die mechanischen Eigenschaften des Festtreibstoffs beeinträchtigt. Für Composit-Festtreibstoffe der eingangs genannten Art vereinigen diese Eigenschaften in besonderer Weise Abbrandmodifikatoren aus der Gruppe der Ferrocenderivate.

Flüssige Ferrocenderivate, wie das Ethylferrocen, n-Butylferrocen oder das zweikernige 2,2'-Bis(ethylferrocenyl)propan, erhöhen die Abbrandgeschwindigkeit eines Composittreibstoffs signifikant, ohne daß die Leistung, die Verarbeitbarkeit oder die mechanischen Eigenschaften wesentlich beeinflußt werden. Zugleich erniedrigen die Ferrocenderivate den Druckexponenten "n" des Treibstoffs. Diese Ferrocenderivate zeigen jedoch eine Tendenz zur Migration in die Treibstoffisolierung und zur Oxidation durch Sauerstoff an der Treibstoffoberfläche. Die Migration der Ferrocenderivate führt zu einer geringeren Zuverlässigkeit und einer verkürzten Lebensdauer der Festtreibstoffe.

Die Migrationstendenz der Ferrocenderivate verringert sich, bei Einbau sperriger Liganden, z.B. im 2,2'-Bis(butylferrocenyl)propan oder 2,2'-Bis(butylferrocenyl)pentan [1]. Andere nicht reaktive, schwerflüchtige Ferrocenderivate mit sperrigen Liganden, die für den Einsatz als Abbrandkatalysatoren entwickelt wurden, sind in [7] beschrieben. Weitere bekannte Ferrocenderivate dieser Art sind das 1,4-Diferrocenylpiperazin und das 1-(N-Ferrocenyl-2-aminoethyl)-4-ferrocenoylpiperazin [5].

Um die Migrationstendenz weiter zu reduzieren, wurde bei einem modifzierten Polybutadien (HTPB) mit endständigen Hydroxylgruppen die Ferroceneinheit chemisch über einen Spacer (flexibler Abstandshalter) an das Prepolymer angekoppelt [8, 9]. Dieses Derivat dient als Prepolymer für den Polyurethanbinder. Die Ferroceneinheit zeigt nach der Einarbeitung in den Festtreibstoff keine Tendenz zur Migration. Indes ist dieses Derivat nur über einen schwierigen und komplexen Syntheseweg zugänglich.

Ein anderes Prepolymer, das Ferroceneinheiten enthält, entsteht durch Copolymerisation von Bis(α-hydroxyethyl)ferrocen und Dihydroxyalkoholen wie Hexamethylenglycol, Diethylenglycol oder Triethylenglycol [4]. Bei diesen Prepolymeren mit in die Hauptkette des Polymers einzubindenden Molekülen, leiden die Mischbarkeit und die Kettenbeweglichkeit des polymeren Bindersystems, was die Verarbeitbarkeit und die mechanischen Eigenschaften des Treibstoffs beeinträchtigt.

Weitere Entwicklungen führten zu Ferrocenderivaten mit endständigen reaktiven Gruppen. Als Abbrandmoderatoren wurden Ferrocenderivate mit Thiol-, Hydroxyl- oder Isocyanatgruppen [10] verwendet, jedoch verbessern diese Abbrandmodifikatoren den Abbrand eines Festtreibstoffes nur unwesentlich. So wurden 2-Ferrocenylethanthiol [6], 2-Ferrocenyl-2-(3-hydroxypropyl)tetrahydrofuran, 4-Methyl-4-ferrocenylheptan-1,7-diol, 1,1'-Bis(4-ferrocenyl(1,7-dihydroxy-4-heptyl))ferrocen [2] als einbindbare Ferrocenderivate in Composit-Festtreibstoffen untersucht.

Das Addukt aus Vinylmagnesiumchlorid und Diacetylferrocen konnte ebenfalls erfolgreich als bifunktionelles Ferrocenderivat zusammen mit Polybutadien (HTPB) mit endständigen Hydroxylgruppen und bifunktionellen Iscyanaten als Binderkomposition für Composit-Festtreibstoffe eingesetzt werden [3]. Der Syntheseweg über eine Grignard-Verbindung steht einer großtechnischen Anwendung dieses Ferrocenderivates in Composit-Festtreibstoffen entgegen.

Der Erfindung liegt die Aufgabe zugrunde, einen Composit-Treibstoff mit verbesserten Eigenschaften vorzuschlagen, der ein nicht migrierendes, niedrigviskoses und einfach darzustellendes Ferrocenderivat als Abbrandmodifikator aufweist, sowie ein Verfahren zur Herstellung eines solchen Composit-Festtreibstoffs anzugeben.

Diese Aufgabe wird erfindungsgemäß dadurch gelöst, daß das Ferrocenderivat ein Ferrocenylmethylether oder Ferrocenylcarbonsäureester mit freien OH-Gruppen der allgemeinen Formel 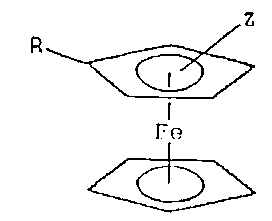 ist, wobei
Z die Ethergruppe CH₂-OX oder die Estergruppe C(O)-O-X und X ein Oligoalkylenglykol- oder ein Diolrest und
R ein gesättigter Kohlenwasserstoffubstituent oder H ist.

Durch die funktionellen OH-Gruppen wird das erfindungsgemäße Ferrocenderivat beim Aushärten des Polymerbinders an dessen Polymergerüst chemisch gebunden. Dadurch wird die Migration des Ferrocenderivats in die Isolationsschicht und an die Treibstoffoberfläche verhindert. Auf diese Weise wird eine höhere Zuverlässigkeit bei gleichzeitig verlängerter Lebensdauer des Treibstoffs erreicht. Ein mit Ferrocenylmethylether, Ferrocenylcarbonsäureester oder deren alkylierten Derivaten als Abbrandmodifikator ausgestatteter Composit-Festtreibstoff zeigt gegenüber einem Treibstoff ohne diesen Zusatz eine bis zu 100% höhere Abbrandgeschwindigkeit bei einer gleichzeitigen Erniedrigung des Druckexponenten um ca. 35% (z.B. von n=0,51 auf n=0,33).

Bevorzugte Vertreter der erfindungsgemäß vorgeschlagenen Ferrocenderivate sind solche, bei denen R ein geradkettiger oder verzweigter Kohlenwasserstoffsubstituent der Formel CₙH₂ₙ₊₁ mit n=1 bis 12 ist oder ein cyclischer Kohlenwasserstoffsubstituent der Formel CₙH₂ₙ₋₁ mit n=3 bis 6 ist.

Ferner ist bei diesen bevorzugten Vertretern X ein Oligoethylen und/oder Oligopropylenglycolrest der allgemeinen Formel

- (CH₂-CH₂-O)ᵣ-(CH₂-CH(CH₃)-O)ₛH

mit r,s=0 bis 12, und mit r+s≥1.

Unter den Ferrocenyl- und Alkylferrocenylestern mit Oligoalkylenglykolrest haben sich solche mit einem Oligoethylenglykolrest mit 2 bis 4 Ethoxyeinheiten oder mit einem Oligopropylenglykolrest mit 2 bis 4 Propoxyeinheiten als besonders wirksam und leicht darstellbar erwiesen. Gleich vorteilhafte Eigenschaften zeigen Ferrocenyl- und Alkylferrocenylether mit geradkettigem oder verzweigtem Aklyldiolrest mit 2 bis 18 C-Atomen der allgemeinen Formel

- (CH₂)ₙ-CH(OH)-(CH₂)ₘ-H

mit n=1 bis 17, vorzugsweise mit n=1 bis 6, m=0 bis 16 und n+m=2 bis 18.

Die erfindungsgemäß vorgeschlagenen Ferrocenylderivate lassen sich besonders vorteilhaft in solche Polyurethanbinder einbauen, deren Prepolymer ein Polybutadien (HTPB), Polyesterpolyol oder Polyetherpolyol mit endständigen Hydroxylgruppen ist.

Als Verknüpfungsreagentien kommen bi- oder trifunktionelle Isocyanate in Frage, und zwar vorzugsweise Isophorondiisocyanat (IPDI), Hexamethylendiisocyanat (HDI), Toluoldiisocyanat (TDI) oder als Biuret- oder Uretdion mehrfach verknüfte HDI-Derivate oder Mischungen derselben. Bei Einsatz difunktioneller Isocyanate können zur Verbesserung der Netzwerkbildung niedermolekulare Triole, z.B. Trimethylolpropan, Trimethylolethan oder 1,2,4-Butantriol, trifunktionelle Polyether oder Polyester in einer etwa dem Ferrocenderivat entsprechenden molaren Konzentration eingesetzt werden.

In einem Composit-Festtreibstoff mit dem erfindungsgemäß ausgebildeten Abbrandmodifikator kann das Oxidationsmittel Ammoniumperchlorat (AP) oder -nitrat (AN) sein. Als metallische Brennstoffe kommen Al- oder Mg-Pulver, als energiereiche Nitramine Hexogen oder Oktogen in Frage.

Eine bevorzugte Zusammensetzung des Composit-Festtreibstoffs gemäß der Erfindung besteht aus 40 bis 85 Mass.% AP oder AN, 10 bis 45 Mass.% Polyurethanbinder (Prepolymer, Härter und polymerspezifischer Weichmacher), 0,1 bis 6,0 Mass.% Ferrocenylmethylether, Ferrocenylcarbonsäureester oder deren alkylierte Derivate und 1 bis 30 Mass.% Brennstoff. Als Brennstoffe eignen sich metallische z.B. Al- oder Mg-Pulver und/oder energiereiche Nitramine. Ferner werden herkömmliche Antioxidantien, Stabilisatoren und Haftvermittler zugegeben. Als Polyurethanprepolymere kommen vorzugsweise in Frage Polybutadien (HTPB) mit endständigen Hydroxylgruppen mit einem mittleren Molekulargewicht von 400 bis 4000, vorzugsweise von 1000 bis 3000 oder Polyester- oder Polyetherprepolymer mit endständigen Hydroxylgruppen mit einem mittleren Molekulargewicht von 300 bis 3000, vorzugsweise 800 bis 2000.

Ein Verfahren zur Herstellung des Composit-Treibstoffs zeichnet sich dadurch aus, daß das flüssige Prepolymer mit Ferrocenylderivat und dem Brennstoff zu einem Slurry gemischt und das Ferrocenderivat nach Zugabe des Härters in den Binder eingebunden wird.

Nachfolgend sind einige Beispiele angegeben:

### Beispiel 1

Ein Gasgeneratortreibstoff weist 1,5 Mass.% Ferrocenylcarbonsäuretriethylenglykolester (FCTEGE) in einer Bindermatrix aus Polycaprolactondiol (PCDL) trifunktionellem, kurzkettigem Polypropylenglykol (PPG) und difunktionellem Polyethylenglykoladipat (PEGA) zusammen mit 70% Ammoniumperchlorat als Oxidator auf.

Der Treibstoff hat folgende Zusammensetzung:

| | |
|---|---|
| 42 Mass.% | Ammoniumperchlorat (30µm) |
| 28 Mass.% | Ammoniumperchlorat (5µm) |
| 1,5 Mass.% | Ferrocenylcarbonsäuretriethylenglykolester |
| 11,7 Mass.% | Polycaprolactondiol (PLCB) |
| 0,6 Mass.% | kurzkettiges Polypropylenglykol (PPG) |
| 6,4 Mass.% | Polyethylenglykoladipat (PEGA) |
| 2,9 Mass.% | Isophorondiisocyanat |
| 6,0 Mass.% | Dibutylphthalat |
| 0,6 Mass.% | Polyoxyethylensorbitantrioleat |
| 0,3 Mass.% | Ruß |

Das Ferrocenderivat ist hierbei in seiner Struktur dem Bindersystem aus Polyesterdiol (PCDL und PEGA) und vernetzendem Polyethertriol (PPG) angepaßt und läßt sich gut einarbeiten.

Der Gasgeneratortreibstoff ist gut verarbeitbar und gießfähig.

| | |
|---|---|
| Gießviskosität | 156 Pas bei 60°C. |

Mechanische Eigenschaften bei 20°C:

| | |
|---|---|
| Zugfestigkeit | 1,19 N/mm² |
| Dehnung | 15% |
| E-Modul | 22,7 N/mm² |

Der Treibstoff zeigt im unteren Druckbereich ein fast plateauähnliches Abbrandverhalten. Die Druckexponenten betragen:
n = 0,08 (4 - 10 MPa)
n = 0,32 (10 - 18 MPa)

Das Abbrandverhalten ist in Diagramm 1 dargestellt. Die berechneten thermodynamischen Eigenschaften betragen für ein Entspannungsverhältnis von 70:1.

| | |
|---|---|
| Spez. Impuls(I_{SP}): | 2097 /N·s/kg |
| Abbrandtemperatur | 2063 K |
| Mittleres Molekulargewicht der entstehenden Gase | 22,07 g |
| Gasausbeute: | 45,3 Mol/kg = 1015 Nl/kg |

### Beispiel 2

Butylferrocenylcarbonsäurediethylenglycolester (BFDEGE) wird als nicht migrierendes Ferrocenderivat zur Steigerung der Abbrandgeschwindigkeit und zur Verbesserung des Druckexponenten zu 1,5 Mass.% in einen Composit-Festtreibstoff eingearbeitet. Der Treibstoff hat folgende Zusammensetzung, alle Angaben in Mass. %:

| | |
|---|---|
| 42,0 Mass.% | Ammoniumperchlorat (5µm), |
| 28,0 Mass.% | Ammoniumperchlorat (30µm), |
| 15,0 Mass.% | Aluminium (5µm), |
| 1,5 Mass. % | Butylferrocenylcarbonsäurediethylenglycolester (BFDEGE), |
| 8,39 Mass.% | HTPB, |
| 1,01 Mass.% | IPDI, |
| 0,16 Mass.% | Haftvermittler Tepanol ® (registrierte Marke) |
| 3,75 Mass.% | Dioctyladipat (Weichmacher), |
| 0,19 Mass.% | Antioxidanz Irganox ® (registrierte Marke) |

Für die vorgenannte Zusammensetzung sind in Diagramm 2 (logarithmischer Maßstab) die Abbrandgeschwindigkeit in Abhängigkeit vom Druck aufgetragen (Kurve "BFDEGE") und in Vergleich gesetzt zu dem gleichen Treibstoff ohne Abbrandmodifikator (Kurve "ohne Kat."), wobei dessen Anteil durch entsprechende Erhöhung des Binderanteils kompensiert ist. Die Erhöhung der Abbrandgeschwindigkeit im niedrigen Druckbereich ist signifikant (100% bei 2 MPa). Der in der ballistischen Bombe gemessene Druckexponent wird von 0,51 auf 0,33 reduziert.

### Beispiel 3

In die Treibstofformulierung von Beispiel 2 werden an Stelle von BFDEGE 1,5 Mass.% Ferrocenylmethyl-2-hydroxypropylether (FMHPE) eingearbeitet. Der Treibstoff zeigt nach etwa 8-stündigem Kneten gute Gieß- und Verlaufseigenschaften. Die Gießviskosität beträgt 360 Pas bei 60°C.

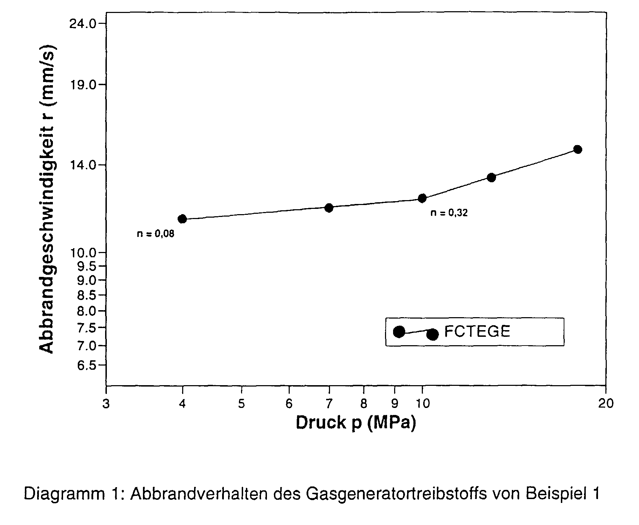

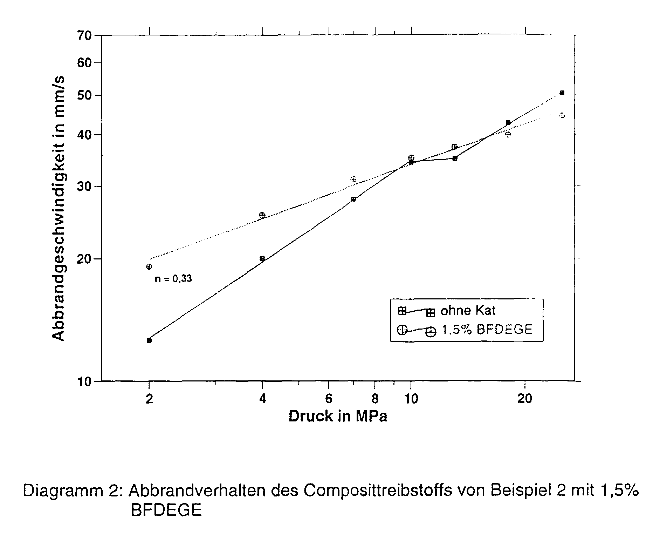

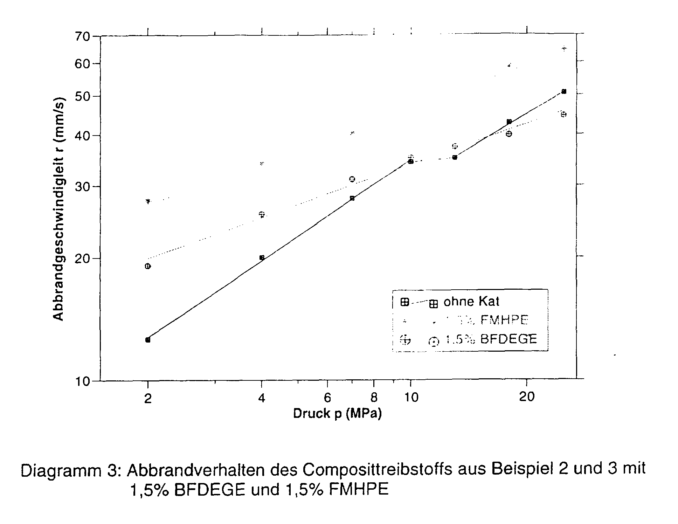

Abbildung 3 zeigt das Abbrandgeschwindigkeitsdiagramm des mit FMHPE versetzten Treibstoffs im Vergleich zu den gleichen Formulierungen mit jeweils 1,5 Mass.% BFDEGE (Beispiel 1) und 1,5 Mass.% 2,2'-Bis(ethylferrocenyl)propan ("Catocen" ®= eingetragene Marke) und dem Composittreibstoff ohne Abbrandmodifikator. Der Vergleich zeigt für den Treibstoff mit eingebundenem und damit nicht mehr migrierendem FMHPE gleich gute Abbrandeigenschaften wie für den Treibstoff, mit dem hoch wirksamen "Catocen". Der Treibstoff mit BFDEGE liegt zwar in der Abbrandgeschwindigkeit geringer, zeigt aber den niedrigsten Druckexponent und insgesamt ein sehr gut eingestelltes Abbrandverhalten.

Zum Vergleich der Wirksamkeit sind in Tabelle 1 die ermittelten Abbrandgeschwindigkeiten und Druckexponenten zusammen mit der Eisenkonzentration im Treibstoff aufgetragen. Bezieht man die Steigerung der Abbrandgeschwindigkeit bei 2 und 10 MPa auf die Eisenkonzentration im Treibstoff, entspricht FMHPE in etwa Catocen und rangiert vor BFDEGE. Durch den Knick in der Abbrandgeschwindigkeitsdruckkurve von "Catocen" sind bei 2 MPa BFDEGE und FMHE wirksamer als "Catocen".

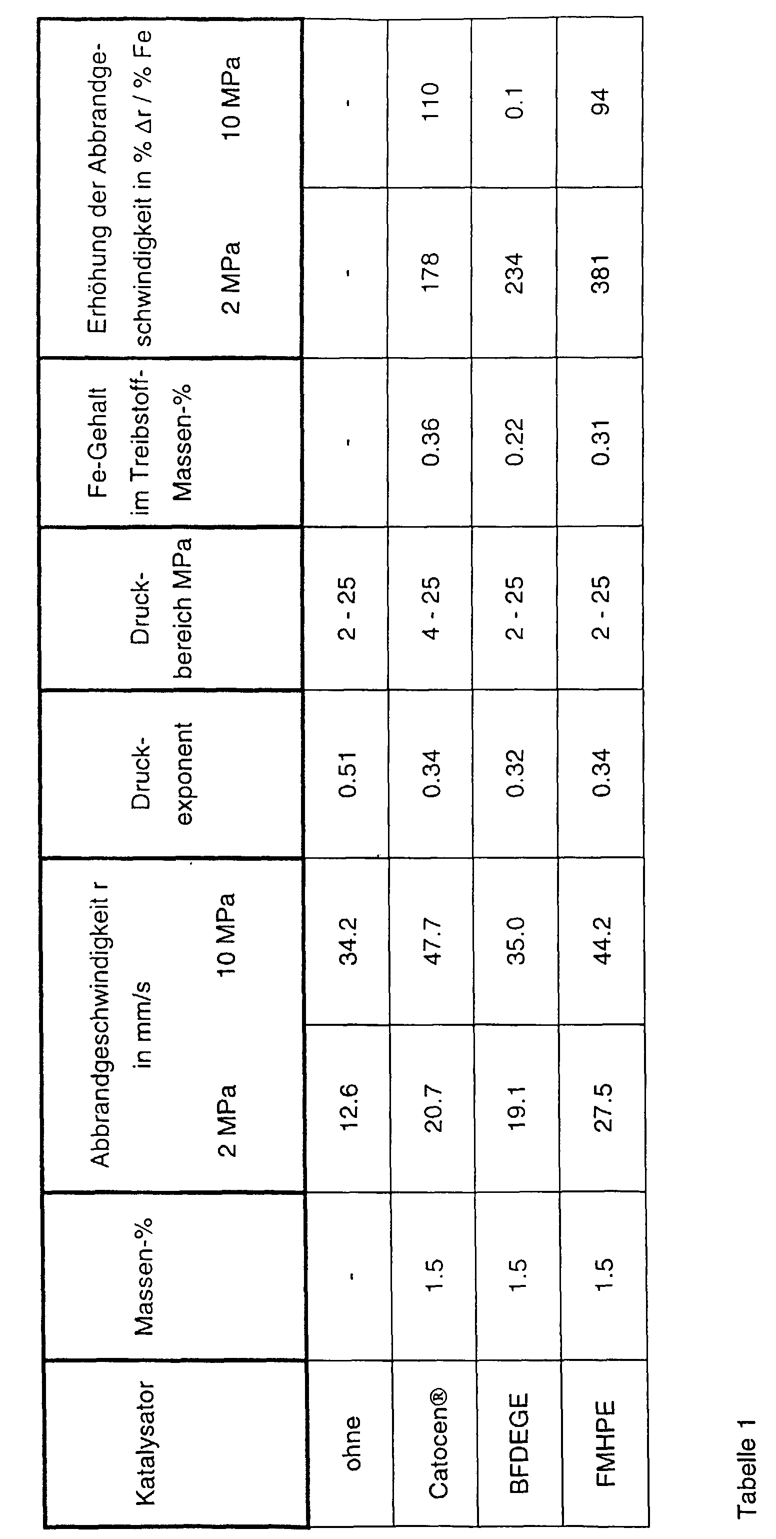

### Literatur

[1] J. Böhnlein-Mauß et al., 24. Internationale Jahrestagung des Fraunhofer-Institutes für Chemische Technologie, Karlsruhe, 71-1 (1993.
[2] US 39 68 126 (W.P. Norris)
[3] US 37 81 179 (C.W. Huskins et al.)
[4] US 35 98 850 (F.M. Dewey)
[5] US 43 97 700 ( N.C. Johnson et al.)
[6] US 4 219 490 (C. Gotzmer, jr.)
[7] C. Gotzmer, jr. et al. "Non-Migrating Ferrocene Modifiers for Composite Propellants", 1979 JANNAF Propulsion Meeting, Vol.2, 475 (1979).
[8] EP 0 169 130 (I.C. Gautier et al.)
[9] S. Raynal, G. Doriath AIAA 22nd Joint Propulsion Conference 1986, Huntville/Alabama
[10] US 3 932 240 (I.D. Braun et al.)
[11] GB 1 279 961

## Patentansprüche

1. Composit-Festtreibstoff, enthaltend ein kristallines anorganisches Oxydationsmittel, einen Binder mit einem flüssigen mehrfach OH-substitutierten Prepolymer, mindestens ein Verknüpfungsreagenz, polymerspezifische Weichmacher, Antioxidantien und Haftvermittler, ein an den Binder angekoppeltes Ferrocenderivat als Abbrandmodifikator und gegebenenfalls einen metallischen Brennstoff und/oder ein energiereiches Nitramin, dadurch gekennzeichnet, daß das Ferrocenderivat ein Ferrocenylmethylether oder ein Ferrocenylcarbonsäureester mit freien OH-Gruppen der allgemeinen Formel 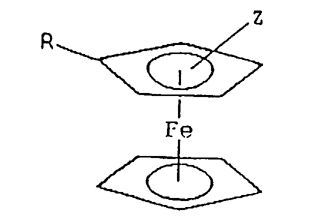 ist, wobei
Z die Ethergruppe CH₂-OX oder die Estergruppe C(O)-O-X und X ein Oligoalkylenglykol- oder ein Diolrest und
R ein gesättigter Kohlenwasserstoffsubstituent oder H ist.

2. Festtreibstoff nach Anspruch 1, wobei R ein geradkettiger oder verzweigter Kohlenwasserstoffsubstituent der Formel CₙH₂ₙ₊₁ mit n=1 bis 12 ist.

3. Festtreibstoff nach Anspruch 1, wobei R ein cyclischer Kohlenwasserstoffstubstituent der Formel CₙH₂ₙ₋₁ mit n=3 bis 6 ist.

4. Festtreibstoff nach einem der Ansprüche 1 bis 3, wobei X ein Oligoethylen- und/oder Oligopropylenglycolrest der allgemeinen Formel
- (CH₂-CH₂-O)ᵣ-(CH₂-CH(CH₃)-O)ₛH
mit r,s=0 bis 12 und r + s ≥ 1 ist.

5. Festtreibstoff nach Anspruch 4, dadurch gekennzeichnet, daß X ein Oligoethylenglycolrest mit 2 bis 4 Ethoxyeinheiten ist.

6. Festtreibstoff nach Anspruch 4, dadurch gekennzeichnet, daß X ein Oligopropylenglykolrest mit 2 bis 4 Propoxyeinheiten ist.

7. Festtreibstoff nach einem der Ansprüche 1 bis 3, wobei X ein geradkettiger oder verzweigter Alkyldiolrest mit 2 bis 18 C-Atomen der allgemeinen Formel
-(CH₂)ₙ-CH(OH)-(CH₂)ₘ-H
mit n=1 bis 17, m=0 bis 16 und n+m=2 bis 18 ist.

8. Festtreibstoff nach einem der Ansprüche 1 bis 7, dadurch gekennzeichnet, daß das mehrfach OH-substituierte Prepolymer ein Polyurethanprepolymer in Form eines Polybutadiens (HTPB), Polyester- oder Polyetherpolyols mit endständigen Hydroxylgruppen ist.

9. Festtreibstoff nach einem der Ansprüche 1 bis 8, dadurch gekennzeichnet, daß die Verknüpfungsreagentien bi- oder trifunktionelle Isocyanate sind.

10. Festtreibstoff nach einem der Ansprüche 1 bis 9, dadurch gekennzeichnet, daß die Verknüpfungsreagentien Isophorondiisocyanat (IPDI), Hexamethylendiisocyanat (HDI), Toluoldiisocyanat (TDI) oder als Biuret- oder Uretdion mehrfach verknüpfte HDI-Derivate oder Mischungen derselben sind.

11. Festtreibstoff nach Anspruch 9 oder 10, dadurch gekennzeichnet, daß bei Einsatz bifunktioneller Isocyanate zur Verbesserung der Netzwerkbildung niedermolekulare Triole aus der Gruppe Trimethylolpropan, Trimethylolethan, 1,2,4-Butantriol, oder daß trifunktionelle Polyether oder Polyester in einer etwa dem Ferrocenderivat entsprechenden molaren Konzentration vorgesehen sind.

12. Festtreibstoff nach einem der Ansprüche 1 bis 11, dadurch gekennzeichnet, daß das Oxidationsmittel Ammoniumperchlorat (AP) oder -nitrat (AN) ist.

13. Festtreibstoff nach einem der Ansprüche 1 bis 12, dadurch gekennzeichnet, daß der metallische Brennstoff Aluminium (Al) oder Magnesium (Mg) ist.

14. Festtreibstoff nach einem der Ansprüche 1 bis 13, dadurch gekennzeichnet, daß das energiereiche Nitramin Hexogen oder Oktogen ist.

15. Festtreibstoff nach einem der Ansprüche 1 bis 14, wobei der Ferrocenylmethylether, Ferrocenylcarbonsäureester oder deren alkylierte Derivate mit 0,1 bis 6,0 Mass.% zugesetzt sind.

16. Festtreibstoff nach einem der Ansprüche 1 bis 14, bestehend aus 40 bis 85 Mass.% AP oder AN, 1 bis 30 Mass.% Brennstoff und 10 bis 45 Mass.% Polyurethanbinder (Prepolymer und Härter) einschließlich polymerspezifischer Weichmacher, Antioxidantien, Stabilisatoren und Haftvermittler.

17. Festtreibstoff nach Anspruch 13 und 16, dadurch gekennzeichnet, daß als Brennstoff Al- oder Mg-Pulver mit 1 bis 30 Mass.% zugesetzt ist.

18. Festtreibstoff nach Anspruch 14 und 16, dadurch gekennzeichnet, daß als Brennstoff 1 bis 30 Mass.% energiereiche Nitramine zugesetzt sind.

19. Festtreibstoff nach einem der Ansprüche 8 bis 18, dadurch gekennzeichnet, daß das Polybutadien (HTPB) mit endständigen Hydroxylgruppen ein mittleres Molekulargewicht von 400 bis 4000, vorzugsweise von 1000 bis 3000 aufweist.

20. Festtreibstoff nach einem der Ansprüche 1 bis 17, dadurch gekennzeichnet, daß das Polyester- oder Polyetherprepolymer mit endständigen Hydroxylgruppen ein mittleres Molekulargewicht von 300 bis 3000, vorzugsweise 800 bis 2000 aufweist.

21. Verfahren zur Herstellung eines Composit-Festtreibstoffs nach einem der Ansprüche 1 bis 20, dadurch gekennzeichnet, daß das mehrfach OH-substituierte Prepolymer mit dem Ferrocenderivat, dem Oxidationsmittel, dem Brennstoff und anderen Additiven zu einem Slurry gemischt und das Ferrocenderivat nach Zugabe des Verknüpfungsreagents in den Binder eingebunden wird.

## Claims

1. Composite propellant containing a crystalline, inorganic oxidant, a binder with a liquid repeatedly OH substituted prepolymer, at least one cross-linking reagent, polymer-specific softeners, antioxidants and bonding agents, a ferrocene derivative coupled to the binder as a combustion modifier and possibly a metallic combustible and/or a high-energy nitroamine, characterised in that the ferrocene derivative is a ferrocenyl methyl ether or a ferrocenyl carbonic ester with free OH groups of the general formula, 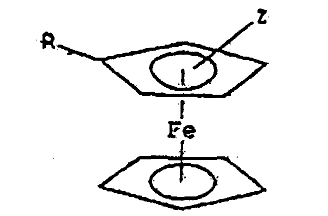 Z being the ether group CH₂-OX or the ester group C(O)-O-X and X being an oligo alkylene glycol radical or a diol radical and R being a saturated hydrocarbon substituent or being H.

2. Propellant according to claim 1, R being a straight-chain or branched hydrocarbon substituent of the formula Cₙ H₂ₙ₊₁ with n = 1 to 12.

3. Propellant according to claim 1, R being a cyclic hydrocarbon substituent of the formula Cn H₂ₙ₋₁ with n = 3 to 6.

4. Propellant according to one of the claims 1 to 3, X being an oligoethylene- and/or oligopropylene glycol radical of the general formula
- (CH₂ - CH₂ - O)ᵣ - (CH₂ - CH (CH₃) - O)ₛH
with r, s = 0 to 12 and r + s ≥ 1.

5. Propellant according to claim 4, characterised in that X is an oligoethylene glycol radical with 2 to 4 ethoxy-units.

6. Propellant according to claim 4, characterised in that X is an oligopropylene glycol radical with 2 to 4 propoxy-units.

7. Propellant according to one of the claims 1 to 3, X being a straight-chain or branched alkyl diol radical with 2 to 18 C atoms of the general formula
- (CH₂)ₙ - CH (OH) - (CH₂)ₘ - H
with n = 1 to 17, m = 0 to 16 and n + m = 2 to 18.

8. Propellant according to one of the claims 1 to 7, characterised in that the repeatedly OH substituted prepolymer is a polyurethane prepolymer in the form of a polybutadiene (HTPB), polyester- or polyether polyol with terminal hydroxyl groups.

9. Propellant according to one of the claims 1 to 8, characterised in that the cross-linking reagents are bi- or trifunctional isocyanates.

10. Propellant according to one of the claims 1 to 9, characterised in that the cross-linking reagents are isophorone diisocyanate (IPDI), hexamethylene diisocyanate (HDI), toluene diisocyanate (TDI), or as biuret- or uret dion repeatedly cross-linked HDI derivatives or mixtures of the same.

11. Propellant according to claim 9 or 10, characterised in that, when using bifunctional isocyanates to improve the formation of the network, low molecular triols from the group trimethylol propane, trimethylol ethane, 1, 2, 4-butane triol are provided, or in that trifunctional polyethers or polyesters are provided in a molar concentration corresponding roughly to the ferrocene derivative.

12. Propellant according to one of the claims 1 to 11, characterised in that the oxidant is ammonium perchlorate (AP) or ammonium nitrate (AN).

13. Propellant according to one of the claims 1 to 12, characterised in that the metallic combustible is aluminium (Al) or magnesium (Mg).

14. Propellant according to one of the claims 1 to 13, characterised in that the high-energy nitroamine is hexogen or octogen.

15. Propellant according to one of the claims 1 to 14, the ferrocenyl methyl ether, ferrocenyl carbonic ester or their alkylated derivatives being added at 0.1 to 6.0% by mass.

16. Propellant according to one of the claims 1 to 14, comprising 40 to 85% by mass of AP or AN, 1 to 30% by mass of combustible and 10 to 45% by mass of polyurethane binder (prepolymer and hardener) including polymer-specific softeners, antioxidants, stabilisers and bonding agents.

17. Propellant according to claim 13 and 16, characterised in that Al or Mg powder is added at 1 to 30% by mass as the combustible.

18. Propellant according to claim 14 and 16, characterised in that high-energy nitroamines are added at 1 to 30% by mass as the combustible.

19. Propellant according to one of the claims 8 to 18, characterised in that the polybutadiene (HTPB) with terminal hydroxyl groups has an average molecular weight of 400 to 4000, preferably of 1000 to 3000.

20. Propellant according to one of the claims 1 to 17, characterised in that the polyester- or polyether prepolymer with terminal hydroxyl groups has an average molecular weight of 300 to 3000, preferably 800 to 2000.

21. Method for producing a composite propellant according to one of the claims 1 to 20, characterised in that the repeatedly OH substituted prepolymer is mixed with the ferrocene derivative, the oxidant, the combustible and other additives to a slurry and the ferrocene derivative is integrated into the binder after addition of the cross-linked reagent.

## Revendications

1. Propergol composite contenant un oxydant inorganique cristallin, un liant avec un prépolymère liquide comportant plusieurs substituions OH, au moins un réactif de raccordement, un plastifiant spécifique du polymère, des antioxydants et des corps favorisant l'adhérence, un dérivé de ferrocène couplé au liant comme modificateur de combustion et le cas échéant un combustible métallique et/ou une nitramine riche en énergie,
caractérisé en ce que
le dérivé de ferrocène est un éther méthylique de ferrocényle ou un ester d'acide ferrocényl carboxylique comportant des groupes OH libres, de formule générale 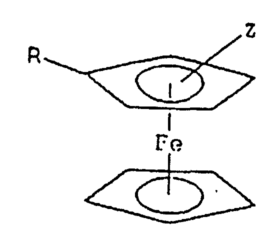 dans laquelle
Z représente le groupe éther CH₂-OX, ou le groupe ester C(O)-O-X et X représente un radical oligoalkylène glycol ou un radical diol, et
R est un substituant hydrocarboné saturé ou H.

2. Propergol selon la revendication 1, dans lequel R est un substituant hydrocarboné à chaîne droite ou ramifiée de formule CₙH₂ₙ₊₁ avec n = 1 à 12.

3. Propergol selon la revendication 3, dans lequel R est un substituant hydrocarboné cyclique de formule CₙH₂ₙ₋₁ avec n = 3 à 6.

4. Propergol selon l'une des revendications 1 à 3, dans lequel X est un radical oligoéthylène- et/ou oligopropylène glycol de formule générale
- (CH₂-CH₂-O)ᵣ-(CH₂-CH(CH₃)-O)ₛH
dans laquelle r, s = 0 à 12 et r + s ≥ 1.

5. Propergol selon la revendication 4,
caractérisé en ce que
X est un radical oligoéthylène glycol ayant de 2 à 4 unités éthoxy.

6. Propergol selon la revendication 4,
caractérisé en ce que
X est un radical oligopropylène glycol ayant de 2 à 4 unités propoxy.

7. Propergol selon l'une des revendications 1 à 3, dans lequel X est un radical alkyldiol à chaîne droite ou ramifiée ayant 2 à 18 atomes de carbone, de formule générale
- (CH₂)ₙ-CH(OH)-(CH₂)ₘ-H
dans laquelle n = 1 à 17, m = 0 à 16 et n+m = 2 à 18.

8. Propergol selon l'une des revendications 1 à 7,
caractérisé en ce que
le prépolymère comportant plusieurs substitutions OH est un prépolymère de polyuréthane sous la forme d'un polybutadiène (HTPB), d'un polyester- ou polyétherpolyol avec des groupes hydroxyle en position finale.

9. Propergol selon l'une des revendications 1 à 8,
caractérisé en ce que
les réactifs de raccordement sont des isocyanates bi- ou trifonctionnels.

10. Propergol selon l'une des revendications 1 à 9,
caractérisé en ce que
les réactifs de raccordement sont le diisocyanate d'isophorone (IPDI), le diisocyanate d'hexaméthylène (HDI), le diisocyanate de toluène (TDI) ou des dérivés d'HDI à plusieurs liaisons biuret ou urétdione, ou des mélanges de ces corps.

11. Propergol selon la revendication 9 ou 10,
caractérisé en ce que
lorsqu'on utilise des isocyanates bifonctionnels pour améliorer la formation d'un réseau, on prévoit des triols de faibles poids moléculaire du groupe du triméthylolpropane, du triméthyloléthane, du 1,2,4-butanetriol, ou des polyéthers ou polyesters trifonctionnels en une concentration molaire correspondant approximativement à celle du dérivé de ferrocène.

12. Propergol selon l'une des revendications 1 à 11,
caractérisé en ce que
l'oxydant est le perchlorate d'ammonium (AP) ou le nitrate d'ammonium (AN).

13. Propergol selon l'une des revendications 1 à 12,
caractérisé en ce que
le combustible métallique est l'aluminium (Al) ou le magnésium (Mg).

14. Propergol selon l'une des revendications 1 à 13,
caractérisé en ce que
la nitramine riche en énergie est l'exogène ou l'octogène.

15. Propergol selon l'une des revendications 1 à 14,
dans lequel
on ajoute l'éther méthylique de ferrocényle, l'ester d'acide ferrocénylcarboxylique ou leurs dérivés alkylés à raison de 0,1 à 6,0 % massique.

16. Propergol selon l'une des revendications 1 à 14,
constitué de 40 à 85 % massique d'AP ou d'AN, de 1 à 30 % massique de combustible, et de 10 à 45 % massique de liant polyuréthane (prépolymère et durcissant) y compris les plastifiants, antioxydants, stabilisateurs et corps facilitant l'adhérence, spécifiques du polymère.

17. Propergol selon les revendications 13 et 16,
caractérisé en ce qu'
on ajoute comme combustible des poudres d'Al et de Mg à raison de 1 à 30 % massique.

18. Propergol selon les revendications 14 et 16,
caractérisé en ce qu'
on ajoute comme combustible de 1 à 30 % massique de nitramines riches en énergie.

19. Propergol selon l'une des revendications 8 à 18,
caractérisé en ce que
le polybutadiène (HTPB) avec groupes hydroxy en position finale présente un poids moléculaire moyen de 400 à 4000, de préférence de 1000 à 3000.

20. Propergol selon l'une des revendications 1 à 17,
caractérisé en ce que
le prépolymère de polyester ou de polyéther avec groupes hydroxyle en position finale présente un poids moléculaire moyen de 300 à 3000, de préférence de 800 à 2000.

21. Procédé de fabrication d'un propergol composite selon l'une des revendications 1 à 20,
caractérisé en ce qu'
on mélange le prépolymère polysubstitué par OH avec le dérivé de ferrocène, l'oxydant, le combustible et d'autres additifs pour obtenir une bouillie et en ce qu'on intègre le composé de ferrocène dans le liant après addition du réactif de raccordement.
